# EUROPEAN PATENT APPLICATION

(11) **EP 1 310 888 A1**
(43) Date of publication of application: **14.05.2003**
(21) Application number: 02016394.5
(22) Date of filing: 26.07.2002
(51) Int. Cl.: G06F 17/60

(54) **System, method and program for online shopping**

(30) Priority: 30.07.2001 JP 2001230417
(71) Applicant: Ricoh Company, Ltd., Tokyo 143-8555 (JP)
(72) Inventor: Kon, Tsutomu, Yokohama-shi, 221-0861 (JP)
(74) Representative: Schwabe, Hans-Georg, Dipl.-Ing.

(57) **Abstract**

A server (10) acquires specification information specifying a feature(s) of a product requested by a customer, from a customer terminal 20 through the Internet (50). The i server 10 searches an OA-apparatus DB for data records regarding OA apparatuses, based on the acquired specification information. The server 10 searches an OA-apparatus feature DB for feature information representing a product specified in the searched data records. The server (10) generates feature-displaying information for displaying feature information on a display unit of the customer terminal (20), using the searched feature information. The server (10) sends the generated feature-displaying information to the customer terminal (20) through the Internet. The customer terminal (20) receives the feature-displaying information, and displays a product-feature page on the display unit.

## Description

The present invention relates to a system for assisting customers in purchasing products through the Internet.

In recent years, product sales have been popular, as the Internet has been widely spread. According to one online shopping method of selling/purchasing products through the Internet, products are introduced and ordered through virtual stores built on the network. After this, the ordered products are delivered to the customer. According to such product sales through the Internet, sellers need only a small amount of money for their stores. At the same time, while customers are home, they can purchase those product items that they like from all over the world.

Conventionally, in product sales through the Internet, a Web page expressing product information is sent to a customer terminal , upon reception of a request therefor from the customer terminal. This product information given to the customer terminal includes those information items that are formed on the side of the seller, so that the product information may not include information based on which the customer may decide whether to purchase a product item. Thus, in the conventional product sales through the Internet, in the case where the customer tries to find a product with desired features, the customer needs to sequentially access various Web pages from one to another provided from the virtual stores. This is such a troublesome thing to do for the customer.

The present invention has been made in consideration of the above. It is accordingly an object of the present invention to provide a system for and method of assisting customers in purchasing products.

Another object thereof is to provide a system for and method of providing customers with product information required by the customers.

In order to achieve the above object, according to the first aspect of the present invention, there is provided a system for assisting users in purchasing products characterized by comprising:
feature information storage means (15) for storing feature information representing a feature of the product;
function information storage means (15) for storing function information representing a function of the product;
specification-information acquisition means (16) for acquiring specification information representing a user-specified function of the product requested by a customer through a Network (50);
function-information searching means (11) for searching for the function information stored in the function information storage means (15), based on the specification information acquired by the specification-information acquisition means (16);
feature information reading means (11) for reading the feature information regarding the product specified in the function information searched by the function-information searching means (11), from the feature information storage means (15) ;
feature-displaying information generation means (11) for generating feature-displaying information for displaying the feature information to be displayed on a display unit, using the feature information which is read out by the feature information reading means (11); and
feature-displaying-information supplying means (16) for supplying the feature-displaying information generated by the feature-displaying information generation means (11), through the Network (50).

According to this invention, the system can easily provide the customers with product information requested by the customers, based on the specification information specifying the function of the product which is requested by the customer terminal (20).

The feature information stored in the feature-information storage may represent a name of the product, a manufacturer of the product, a retail price of the product, and the feature of the product; and
the feature-displaying-information supplying means (16) may generate, as the feature displaying information, the product information representing the name of the product, the manufacturer of the product, the retail price of the product and the feature of the product, based on the feature information read out by the feature information reading means (11).

According to this structure, product information representing the feature of each of various products manufactured by various manufacturers and representing also the retail price thereof can be provided to customers. Based on the provided product information, the customers can decide what to purchase.

The system may be characterized by further comprising:
instruction-receiving means (16) for receiving an instruction for displaying the function of the product specified in the feature displaying information, from at least one customer terminal (20) through the Network (50), after the feature-displaying-information supplying means (16) supplies at least one customer terminal (20) with the feature displaying information;
function-displaying information generation means (11) for generating, as function displaying information for newly displaying product information on the display unit of the at least one customer terminal (20), the new product information representing the function of the product specified in the function information searched by the function-information searching means (11), in a case where the instruction-receiving means (16) receives the instruction from the at least one customer terminal (20); and
function-displaying information supplying means (16) for supplying the at least one customer terminal (20) with the product information generated by the function-displaying information generation means (11), through the Network (50).

The function information stored in the function information storage means (15) may represent a name of a product, a manufacturer of the product, a retail price of the product, and a function of the product; and
the function-displaying information supplying means (16) may generate, as the function displaying information, the product information representing the name of the product, the manufacturer of the product, the retail price of the product and the function of the product, based on the function information searched by the function-information searching means (11).

According to this invention, product information representing the feature of each of various products manufactured by various manufacturers and representing also the retail price thereof can be provided to customers. Based on the provided product information, the customers can decide what to purchase.

In order to accomplish the above object, according to the second aspect of the present invention, there is provided a method of assisting users in purchasing products characterized by comprising the steps of:
acquiring specification information specifying a function of the user-requested product, from the at least one customer terminal (20) through the Network (50);
searching function information representing a function of a product stored in storage means (15), based on the acquired specification information;
reading feature information representing a feature of the product specified in the searched function information;
generating feature displaying information for displaying the feature information on a display, using the read feature information; and
supplying the generated feature displaying information through the Network (50).

According to this invention, based on the specification information specifying a function of the customer-requested product, the system can provide the customer with the product information.

The feature information may represent a name of the product, a manufacturer of the product, a retail price of the product and a feature of the product; and
the method may be characterized by further comprising the step of
generating the feature displaying information for displaying the feature information representing the name of the product, the manufacturer of the product, the retail price of the product and the feature of the product, based on the read feature information.

The instruction for displaying the function of the product specified in the feature displaying information may be acquired, from at least one customer terminal (20), after supplying the at least one customer terminal (20) with the feature displaying information;
generating, as function displaying information for newly displaying product information on the display unit of the at least one customer terminal (20), the new product information representing the function of the product specified in the searched function information, based on the acquired instruction; and
supplying the at least one customer terminal (20) with the generated product information through the Network (50).

The function information may represent the name of the product, the manufacturer of the product, the retail price of the product and the function of the product; and
the method may be characterized by further comprising the step of
generating the function displaying information for displaying the product information representing the name of the product, the manufacturer of the product, the retail price of the product and the function of the product, based on the searched function information.

In order to accomplish the above object, according to the third aspect of the present invention, there is provided a program for controlling a computer to execute:
a process of acquiring specification information specifying a function of the user-requested product, from at least one customer terminal (20) through Network (50);
a process of searching function information representing a function of a product stored in storage means (15), based on the acquired specification information;
a process of reading feature information representing a feature of the product specified in the searched function information;
a process of generating feature displaying information for displaying the feature information on a display unit of the at least one customer terminal (20), using the read feature information; and
a process of supplying the at least one customer terminal (20) with the generated feature displaying information, through the Network (50).

The object and other objects and advantages of the present invention will become more apparent upon reading of the following detailed description and the accompanying drawings in which:
FIG. 1 is a block diagram showing the structure of a system for assisting customers (users) in purchasing products, according to an embodiment of the present invention;
FIG. 2 is a block diagram showing the structure of a server for assisting customers in purchasing products, which is included in the system of FIG. 1;
FIG. 3 is a diagram showing the structure of a storage device included in the system of FIG. 1;
FIG. 4 is a diagram showing the structure of data items representing OA (Office Automation) apparatuses and stored in an OA apparatus DB of the storage device of FIG. 3;
FIG. 5 is a diagram showing the structure of data items representing the features of OA apparatuses and stored in an OA-apparatus-feature DB of the storage device of FIG. 3;
FIG. 6 is a diagram showing the structure of a customer terminal shown in FIG. 1;
FIGS. 7A and 7B are diagrams each showing an apparatus-type selection page to be displayed by the customer terminal of FIG. 6;
FIG. 8 is a diagram showing an apparatus-function selection page to be displayed by the customer terminal of FIG. 6;
FIG. 9 is a diagram showing a specific-function selection page to be displayed by the customer terminal of FIG. 6;
FIG. 10 is a diagram showing a product-feature page to be displayed by the customer terminal of FIG. 6;
FIG. 11 is a diagram showing a function-comparison page to be displayed by the customer terminal of FIG. 6;
FIG. 12 is a flowchart for explaining a product-information sending/receiving process to be carried out between the customer terminal and the server included in the system of FIG. 1; and
FIG. 13 is a flowchart for further explaining the product-information sending/receiving process of FIG. 12.

A system for and method of assisting customers in purchasing products, according to an embodiment of the present invention, will now be described with reference to the accompanying drawings.

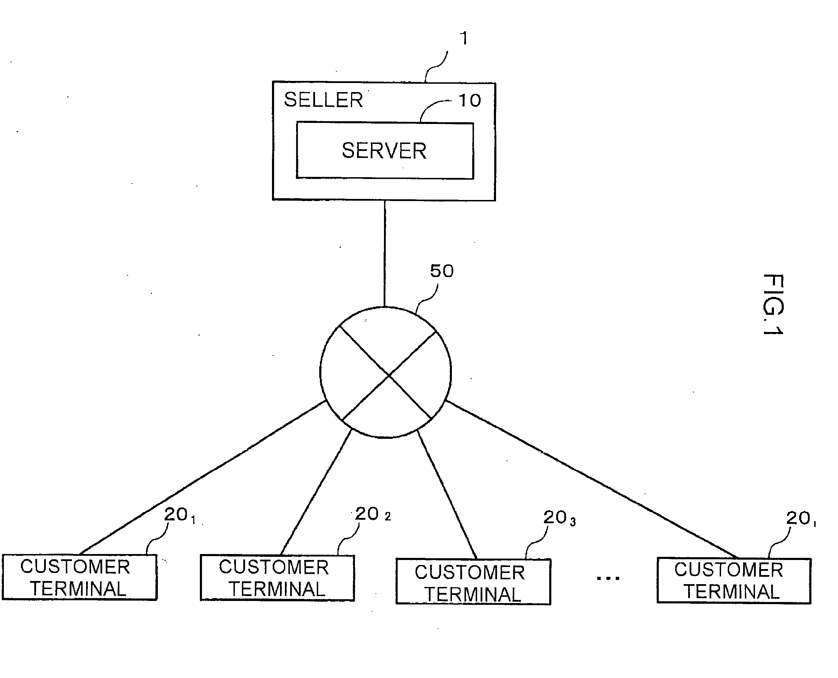

FIG. 1 is a block diagram showing the structure of the system for assisting customers in purchasing products, according to the embodiment of the present invention.

As shown in FIG. 1, the system for assisting customers purchasing products comprises: a server 10 for assisting customers in purchasing products, which is installed in a seller 1 selling OA apparatuses, automobiles, household appliances, etc.; and the first customer terminal 20₁ to the n-th customer terminal 20ₙ (hereinafter referred to simply as a customer terminal 20). The server 10 and the customer terminal 20 are connected to the Internet 50.

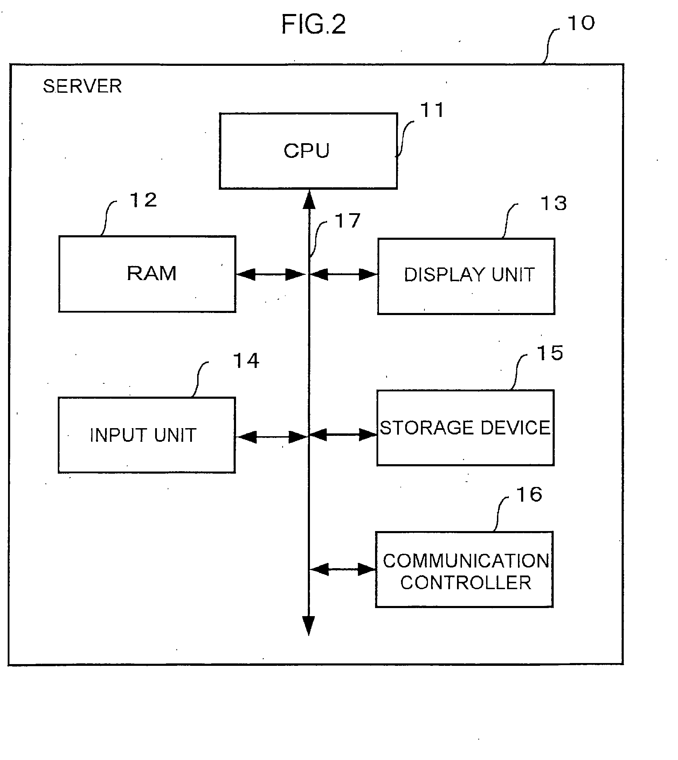

As shown in FIG. 2, the server 10 comprises a CPU (Central Processing Unit) 11, a RAM (Random Access Memory) 12, a display unit 13, an input unit 14, a storage device 15, and a communication controller 16, which are connected with each other through a bus 17.

The CPU 11 stores, in the RAM 12, a system program stored in the storage device 15, application programs for executing the system of this embodiment which operates in accordance with the stored system program, and a WWW (World Wide Web) program for sending information described in HTML (Hyper Text Markup Language) to the Internet 50.

The CPU 11 temporarily stores, in the RAM 12, various instructions or input data which are input from the input unit 14.

The CPU 11 executes a product-information sending/receiving process (as will more specifically be described later) for supplying customers with product information which is necessary for purchasing products, in accordance with the above-described application program.

The RAM 12 stores not only the above-described programs, but also input instructions, input data, and results of process executed by the CPU 11.

The display unit 13 includes a CRT (Cathode Ray Tube), an LCD (Liquid Crystal Display) device, or the like, and displays a page showing the operational state of the server 10.

The input unit 14 may include a keyboard having various function keys, ten keys, or a mouse, and outputs those signals generated upon pressing of keys of the keyboard to the CPU 11.

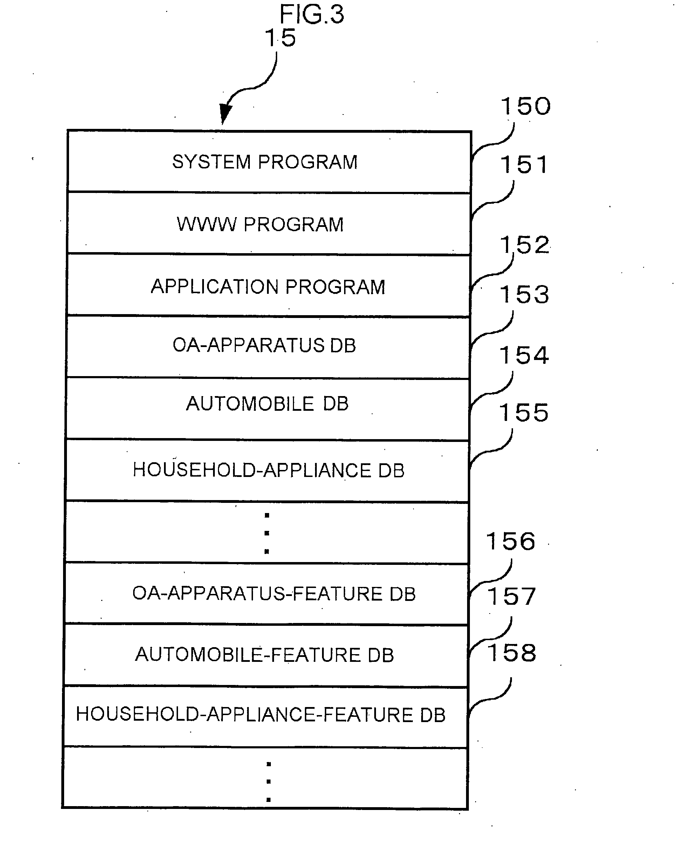

The storage device 15 includes and stores, as shown in FIG. 3, the above-described system program 150, the WWW program 151, the application program 152, an OA-apparatus DB 153, an automobile DB 154, a household-appliance DB 155, an OA-apparatus-feature DB 156, an automobile-feature DB 157 and a household-appliance-feature DB 158, etc.

The OA-apparatus DB 153 stores information (hereinafter referred to as OA-apparatus function data) representing functions of OA apparatuses.

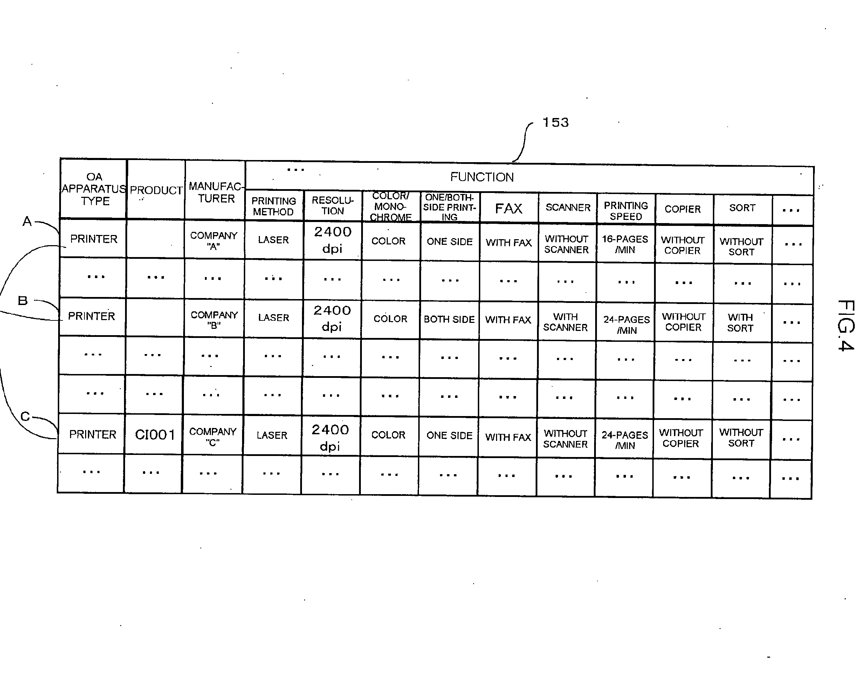

More specifically, as shown in FIG. 4, the OA-apparatus DB 153 includes a plurality of data records A, B and C, each of which includes data items of "Type of OA apparatus" specifying whether a predetermined apparatus is a copier, a printer, a personal computer, a scanner, etc., "Product Name", "Manufacturer" specifying the name of a manufacturer that has manufactured the predetermined apparatus, and "Function" representing each function of the predetermined apparatus.

The automobile DB 154 stores information (hereinafter referred to as automobile function data) representing functions of automobiles.

Though not shown in the illustration, the automobile function data includes data records each of which includes data items of "Type of Automobile" specifying whether a predetermined automobile is, for example, a small-sized automobile, a sedan, a sports car, a truck, etc., "Automobile Name" of the automobile (e.g. ABC1800, etc.), "Car Dealer" of the automobile, and "Function" of the automobile.

The household-appliance DB 155 stores information (hereinafter referred to as household-appliance function data) representing function of household appliances.

The household-appliance function data includes data records each of which includes data items of "Type of Household Appliance" (e.g. a TV, etc:), "Product Name" specifying the product name of a predetermined household appliance, and "Function" of the predetermined household appliance.

The OA-apparatus-feature DB 156 stores information (hereinafter referred to as OA feature data) representing peculiar features of a predetermined product.

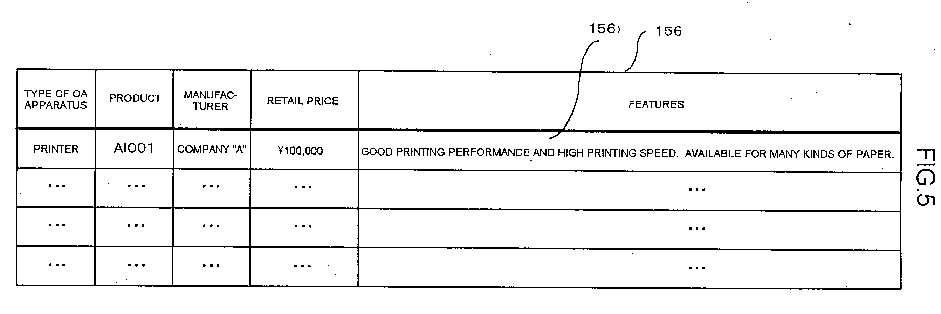

As shown in FIG. 5, the OA feature data includes data records each of which includes data items of "Type of OA Apparatus", "Product Name" of a product apparatus, "Manufacturer" specifying a manufacturer of the product, "Retail Price", and "Features" of the product.

The automobile-feature DB 157 stores information (hereinafter referred to as automobile feature data) representing peculiar features of a predetermined automobile.

Though not shown in the illustration, the automobile feature data includes data records each of which includes data items of "Type of Automobile", "Name of Automobile", "Car Dealer" of a predetermined automobile, "Retail Price" of the automobile, and "Feature" of the automobile.

The household-appliance-feature DB 158 stores information (hereinafter referred to as household-appliance-feature data) representing features of a predetermined household appliance.

The household-appliance-feature data includes data records each of which includes data items of "Type of Household Appliance", "Product Name" specifying the name of a predetermined household appliance, "Manufacturer" specifying a manufacturer of the household appliance, "Retail Price", and "Features".

The communication controller 16 controls data communications for sending/receiving data to/from the customer terminal 20, in accordance with instructions of the CPU 12.

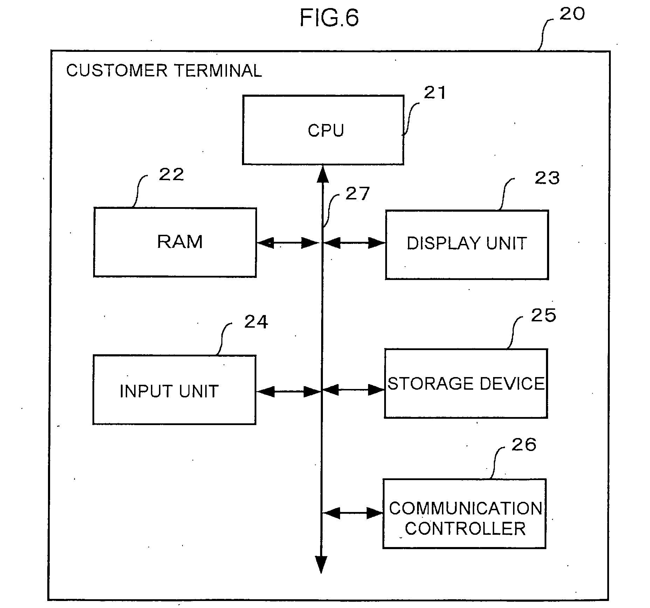

The customer terminal 20 comprises , as shown in FIG. 6, a CPU 21, a RAM 22, a display unit 23, an input unit 24, a storage device 25, and a communication controller 26, which are connected with each other through a bus 27.

Likewise the CPU 11, the CPU 21 also stores the system program, various application programs, and the WWW program which are stored in the storage device 25, and further stores those instructions or data input from the input unit 24, temporarily in the RAM 12. The CPU 21 executes any of those processes, in accordance with the application programs.

The display unit 23 includes a CRT, an LCD device or the like, and displays pages showing product information necessary for purchasing products.

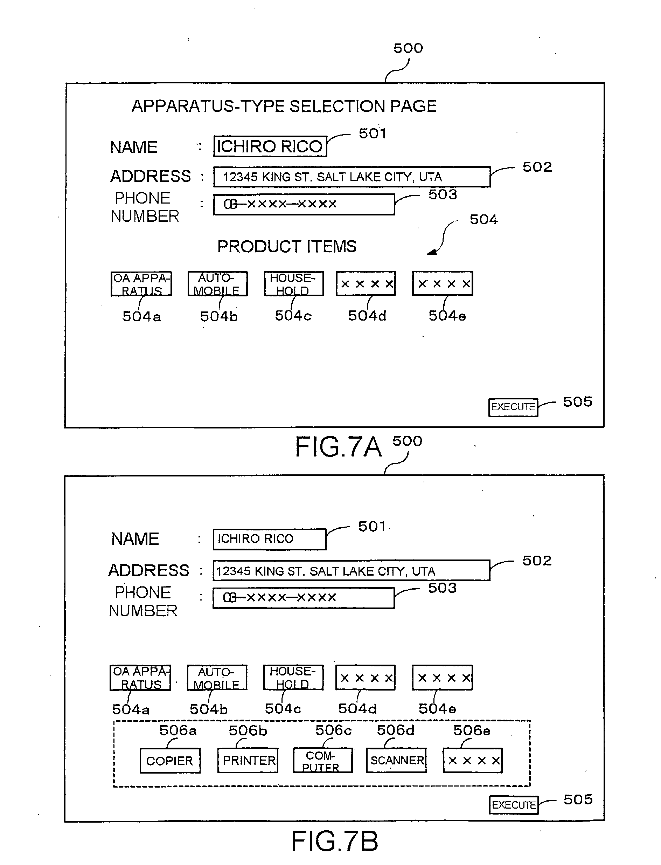

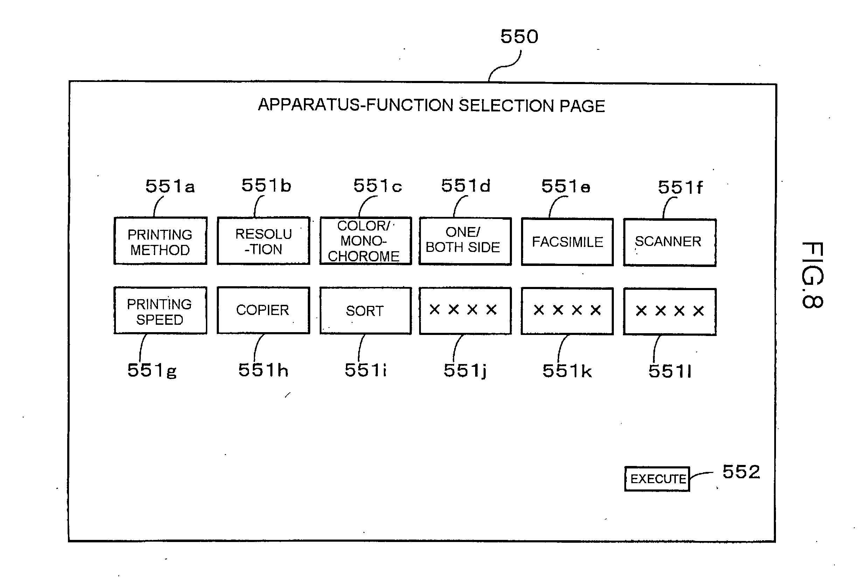

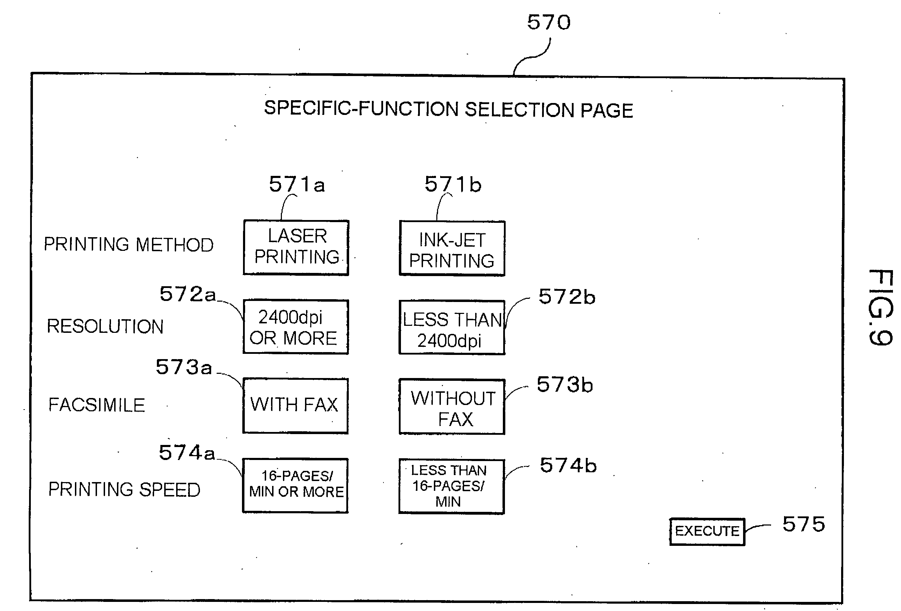

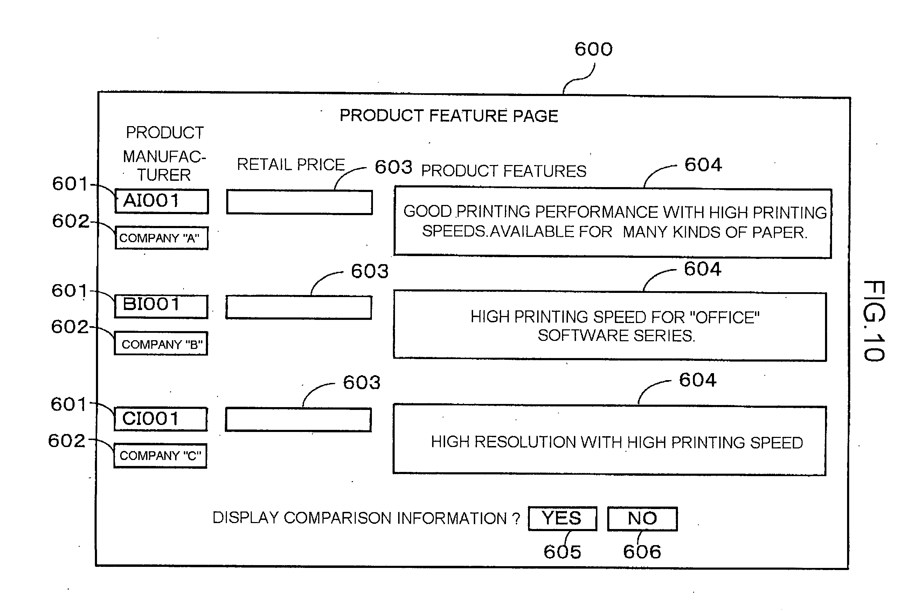

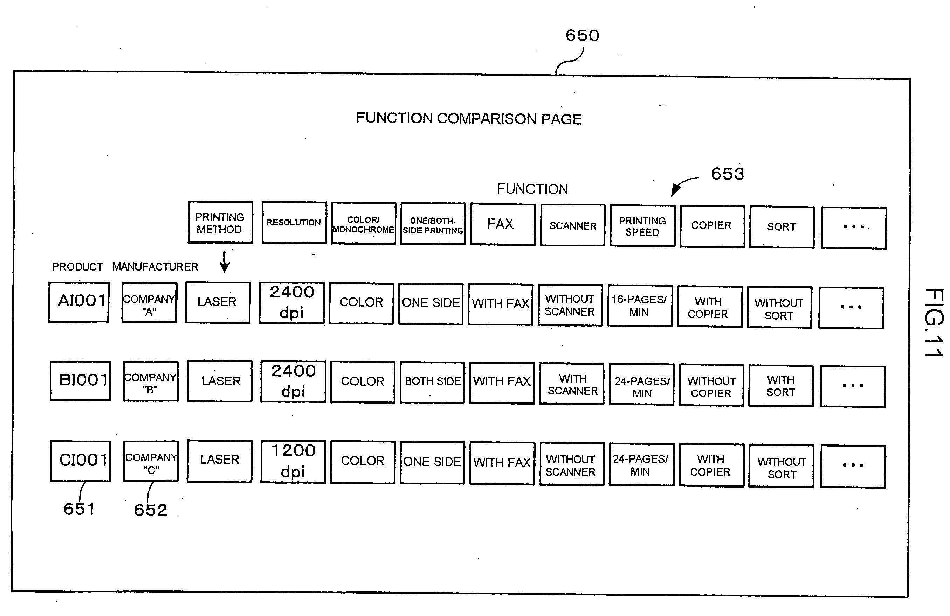

Those pages displayed by the display unit 23 include: an apparatus-type selection page 500 shown both in FIGS. 7A and 7B, an apparatus-function selection page 550 shown in FIG. 8, a specific-function selection page 570 shown in FIG. 9, a product-feature page 600 shown in FIG. 10, and a function-comparison page 650 shown in FIG. 11.

The apparatus-type selection page 500 is a page selecting a type of product to be purchased from a plural types of products, and includes input sections of: "Customer Name" 501 for inputting the name of a corresponding customer; "Address" 502 for inputting the address of the customer; and "Phone Number" 503 for inputting the phone number of the customer, and buttons "OA Apparatus" 501a, "Automobile" 501b, "Household Appliances" 504c, etc. for selecting a type of product that the customer is willing to purchase, and a button "Execute" 505 for executing a predetermined instruction.

In the case where the customer selects "OA Apparatus" 501a in the apparatus-type selection page 500, as shown in IFG. 7B, there are displayed buttons "Copier" 506a, "Printer" 506b, "Personal Computer" 506c, "Scanner" 506d, etc. respectively representing plural types of OA apparatuses from which the customer can select a desired OA apparatus to be purchased.

The apparatus-function selection page 550 shown in FIG. 8 is a page for selecting one or more functions that the customer wants in the product, which is selected in the above-described apparatus-type selection page 500. In this apparatus-function selection ) page 550, there are displayed buttons "Printing Method" 551a, "Resolution" 551b, "Color/Monochrome" 551c, "One/Both-Side Printing" 551d, "Facsimile" 551e, "Scanner" 551f, "Printing Speed" 551g, "Copy" 551h, "Sort" 551i, etc. for respectively representing a plurality of functions of the selected product. In addition, this page 550 includes a button "Execute" 552 for executing a predetermined instruction.

The specific-function selection page 570 shown in FIG. 9 is a page for selecting one or more further specific functions of the selected product, in association with the function(s) selected in the apparatus-function selection page 550. For example, in the page 570, there are displayed buttons "Laser Printing" 571a, "Ink-Jet Printing" 571b, "2400dpi or More" 572a, "Less than 2400dpi" 572b, "With Facsimile" 573a, "Without Facsimile" 573b, "16-pages/min or More" 574a, "Less than 16-pages/min" 574b.

The product-feature page 600 shown in FIG. 10 includes display sections of:
"Product Name" 601 for showing the name of a product having the customer-selected functions, "Manufacturer" 602 for showing the name of a manufacturer manufacturing the product, "Retail Price" 603 for showing the retail price of the product, and "Feature" 604 for showing the feature(s) of the product. In addition, the product-feature page 600 further displays "YES" button 605 and "NO" button 606 for specifying whether to display the function-comparison page 650 shown in FIG. 11.

The above-described function comparison page 650 is a page showing functions of the products displayed in the product-feature page 600, so that the customer can compare various functions of the products by referring to this page 650. As shown in FIG. 11, the function comparison page 650 includes buttons of: "Product Name" 651 representing a name of a predetermined product displayed in the product-feature page 600; "Manufacturer Name" 652 representing a name of a manufacturer that has produced the predetermined product; and "Function" 653 representing each function of the corresponding product.

Likewise the input unit 14, the input unit 24 outputs those signals generated upon pressing of keys thereof, to the CPU 21.

The communication controller 16 controls data communications to be performed between the customer terminal 20 and the server 10, in response to an instruction sent from the CPU 21.

Operations of the system for assisting customers in purchasing products, according to this embodiment of the present invention, will now be described.

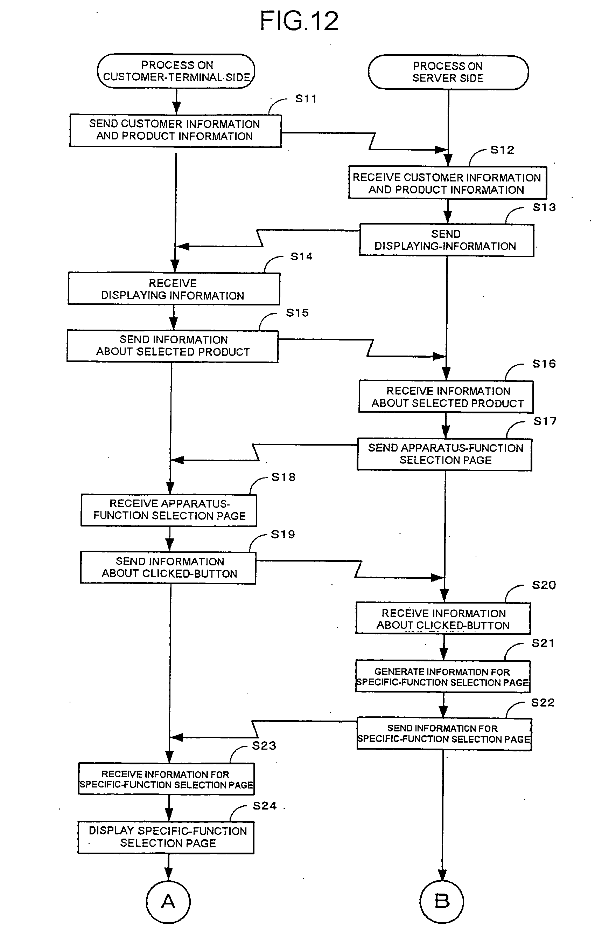

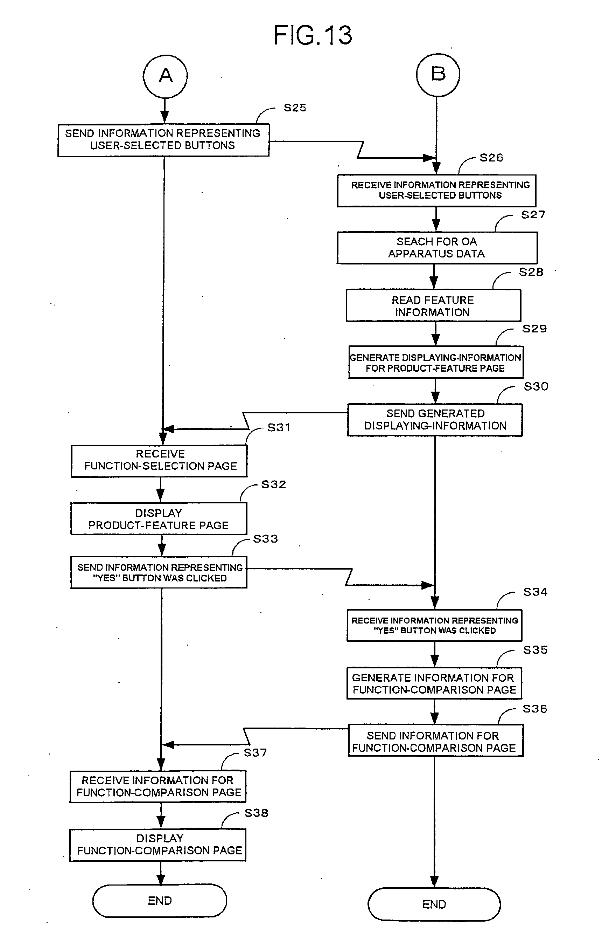

FIGS. 12 and 13 are flowcharts for explaining procedures to be executed both on the customer terminal side and the server side in the system of the present invention.

In the apparatus-type selection page 500 shown in FIG. 7A, a user inputs his/her name in the input section "Customer Name" 501, his/her address in the input section "Address" 502, and his/her phone number in the input section "Phone Number" 503. In addition, the user clicks on either one of the "OA Apparatus" button 504a, the "Automobile" button 504b, the "Household Appliances" 504c, and clicks on the "Execute" button 505. Upon this, the customer terminal 20 sends thus input information to the server 10 (Step S11).

Upon reception of the information from the customer terminal 20 (Step S12), the server 10 temporarily stores the received information in the RAM 12. After this, the server 10 sends, to the customer terminal 20, displaying-information for displaying the buttons 506a to 506e representing types of OA apparatuses, as shown in FIG. 7B (Step S13).

Upon reception of the displaying-information for displaying the buttons 506a to 506e from the server 10 (Step S14), the customer terminal 20 displays the buttons 506a to 506e on the display unit 23.

After this, the customer clicks, for example, on the "Printer" button 506b and the "Execute" button 505. Upon this, the customer terminal 20 sends information representing that the customer clicked on the "Printer" button 506b, to the server 10 through the Internet 50 (Step S15).

Upon reception of the information representing that the customer clicked on the "Printer" button 506b from the customer terminal 20 (Step S16), the server 10 generates displaying-information for displaying the apparatus-function selection page 550 shown in FIG. 8. Then, the server 10 sends the generated data to the customer terminal 20 through the Internet 50 (Step S17).

Upon reception of the generated data from the server 10 (Step S18), the customer terminal 20 displays the apparatus-function selection page 550 on the display unit 23, using on the received data.

In the apparatus-function selection page 550, the customer clicks on the "Printing Method" button 551a, the "Resolution" button 551b, the "Facsimile" button 551e, the "Printing Speed" button 551g, and then the "Execute" button 552. Upon this, the customer terminal 20 sends information representing that the customer clicked on those buttons, to the server 10 through the Internet 50 (Step S19).

Upon reception of the information from the customer terminal 20 (Step S20), the server 10 stores the received information in the RAM 12. After this, the server 10 generates data representing the specific-function selection page 570 shown in FIG. 9, based on thus stored information (Step S21). Then, the server 10 sends the generated data to the customer terminal 20 through the Internet 50 (Step S22).

Upon reception of the data representing the specific-function selection page 570 from the server 10 (Step S23), the customer terminal 20 displays the specific-function selection page 570 on the display unit 23 (Step S24).

After this, in the specific-function selection page 570, the customer selects: the "Laser Printing" button 571a to set the printing method; the "2400dpi or More" button to set the resolution; the "With Facsimile" button 573a to set that a target apparatus should have a facsimile function; and the "16-pages/min or More" button 574a to set the printing speed. Then, the customer clicks on the "Execute" button 575. Upon this, the customer terminal 20 sends information representing the user-selected buttons (functions) to the server 10 through the Internet 50 (Step S25).

Upon reception of the information about the user-selected buttons (Step S26), the server 10 stores thus received information in the RAM 12.

The server 10 sequentially searches the OA-apparatus DB 153 for data records A, B, and C (shown in FIG. 4), which correspond to the user-selected buttons, and stores the searched data records in the RAM 12 (Step S27).

After this, the server 10 reads out an information item 156₁ representing the feature of a corresponding OA apparatus in association with each of the data records A, B and C which are included in the OA-apparatus DB 153 (Step S28).

Then, the server 10 generates data representing the product-feature page 600 to be displayed on the display unit 23, based on the read information item 156₁ (Step S29).
The server 10 sends thus generated data to the customer terminal 20 through the Internet 50 (Step S30).

Upon reception of the generated data from the server 10 (Step S31), the customer terminal 20 displays the product-feature page 600 based on the received data on the display unit 23 (Step S32). After this, in that page, the customer clicks on the "YES" button 605 for specifying whether to display the function-comparison page 650. Upon this, the customer terminal 20 sends information representing that the customer clicked on the "YES" button 605, to the server 10 through the Internet 50 (Step S33).

Upon reception of the information representing that the customer clicked on the "YES" button 604 from the customer terminal 20 (Step S34), the server 10 generates data representing the function-comparison page 650, based on the data records A, B and C regarding the OA apparatus and stored in the RAM 12 (Step S35). The server 10 sends the generated data to the customer terminal 20 through the Internet 50 (Step S36).

Upon reception of the generated data from the server 10 (Step S37), the customer terminal 20 displays the function-comparison page 650 using the received data (Step S38). Of those products shown in the function-comparison page 650, in the case where the customer wants to purchase one of those products, he/she carries out those procedures necessary for purchasing the desired product in a predetermined page (not illustrated) received from the server 10, and then completing the product-information sending/receiving process.

In the step S32, in the case where the customer clicks on the "NO" button 605, the customer terminal 20 sends information representing that the user clicked on the "NO" button 605, to the server 10 through the Internet 50. Of those products, in the case where the customer wants to purchase one of those products, he/she carries out those procedures for purchasing the desired product in a predetermined page (not illustrated) received from the server 10, and then completing the product-information sending/receiving process.

In the above-described embodiment of the present invention, upon reception of the information specifying one or more products that the customer wants to purchase, the server 10 generates data representing the product-feature page 600 to be displayed on the display unit 23 of the customer terminal 20, based on the received information. Then, the server 10 supplies customers with the product information shown in the product-feature page 600, so that the customers can easily acquire the product information.

In the above-described embodiment of the present invention, the server 10 generates product information representing: a product name of each of products; a manufacturer of the products; the retail price of the products; and features and functions of the products. Then, the server 10 supplies customers with the generated product information representing various products of various manufacturers. By this, customers can decide what to purchase, based on the supplied product information about various products of various manufacturers.

In the above-described embodiment of the present invention, the server 10 sends the product-feature page 600 representing the features of products, to the customer terminal 20. Upon reception of an instruction for displaying functions of products displayed on the page 600, the server 10 generates data representing the function-comparison page 650 showing the functions of the products. That is, the server 10 supplies the customers with the product information that the customers are willing to have.

In the above-described embodiment of the present invention, the explanations have been made to the exemplary case wherein the product information regarding "OA apparatus" is provided to the customer. However, the product information regarding "Automobile", "Household Appliances", etc. may be supplied to the customers, as well.

The system of the present invention can be realized by a general computer, without the need for a dedicated system. A program and data for controlling a computer to execute the above-described process may be recorded on a medium (a floppy disk, CD-ROM, DVD or the like) and distributed, and the program may be installed into the computer and run on an OS (Operating System) to execute the above-described processes, thereby achieving the system of the present invention. The above program and data may be stored in a disk device or the like in the server device on the Internet, and embedded in a carrier wave. The program and data embedded in the carrier wave may be downloaded into the computer so as to realize the system of the present invention.

Various embodiments and changes may be made thereonto without departing from the broad spirit and scope of the invention. The above-described embodiment is intended to illustrate the present invention, not to limit the scope of the present invention. The scope of the present invention is shown by the attached claims rather than the embodiment. Various modifications made within the meaning of an equivalent of the claims of the invention and within the claims are to be regarded to be in the scope of the present invention.

## Claims

1. A system for assisting users in purchasing products **characterized by** comprising:
feature information storage means (15) for storing feature information representing a feature of said product;
function information storage means (15) for storing function information representing a function of said product;
specification-information acquisition means (16) for acquiring specification information representing a user-specified function of said product requested by a customer through a Network (50);
function-information searching means (11) for searching for said function information stored in said function information storage means (15), based on said specification information acquired by said specification-information acquisition means (16);
feature information reading means (11) for reading said feature information regarding said product specified in said function information searched by said function-information searching means (11), from said feature information storage means (15) ;
feature-displaying information generation means (11) for generating feature-displaying information for displaying said feature information to be displayed on a display unit, using said feature information which is read out by said feature information reading means (11); and
feature-displaying-information supplying means (16) for supplying said feature-displaying information generated by said feature-displaying information generation means (11), through said Network (50).

2. The system according to claim 1, **characterized in that**:
said feature information stored in said feature-information storage represents a name of said product, a manufacturer of said product, a retail price of said product, and said feature of said product; and
said feature-displaying-information supplying means (16) generates, as said feature displaying information, said product information representing said name of said product, said manufacturer of said product, said retail price of said product and said feature of said product, based on said feature information read out by said feature information reading means (11).

3. The system according to claim 1, **characterized by** further comprising:
instruction-receiving means (16) for receiving an instruction for displaying said function of said product specified in said feature displaying information, from at least one customer terminal (20) through said Network (50), after said feature-displaying-information supplying means (16) supplies at least one customer terminal (20) with said feature displaying information;
function-displaying information generation means (11) for generating, as function displaying information for newly displaying product information on said display unit of said at least one customer terminal (20), said new product information representing said function of said product specified in said function information searched by said function-information searching means (11), in a case where said instruction-receiving means (16) receives said instruction from said at least one customer terminal (20); and
function-displaying information supplying means (16) for supplying said at least one customer terminal (20) with said product information generated by said function-displaying information generation means (11), through said Network (50).

4. The system according to claim 3, **characterized in that**:
said function information stored in said function information storage means (15) represents a name of a product, a manufacturer of said product, a retail price of said product, and a function of said product; and
said function-displaying information supplying means (16) generates, as said function displaying information, said product information representing said name of said product, said manufacturer of said product, said retail price of said product and said function of said product, based on said function information searched by said function-information searching means (11).

5. A method of assisting users in purchasing products, **characterized by** comprising the steps of:
acquiring specification information specifying a function of said user-requested product, from said at least one customer terminal (20) through said Network (50);
searching function information representing a function of a product stored in storage means (15), based on said acquired specification information;
reading feature information representing a feature of said product specified in said searched function information;
generating feature displaying information for displaying said feature information on a display, using said read feature information; and
supplying said generated feature displaying information through said Network (50).

6. The method according to claim 5, **characterized in that**:
said feature information represents a name of said product, a manufacturer of said product, a retail price of said product and a feature of said product; and
said method further comprises said step of
generating said feature displaying information for displaying said feature information representing said name of said product, said manufacturer of said product, said retail price of said product and said feature of said product, based on said read feature information.

7. The method according to claim 5, **characterized by** further comprising the steps of:
acquiring an instruction for displaying said function of said product specified in said feature displaying information, from at least one customer terminal (20), after supplying said at least one customer terminal (20) with said feature displaying information;
generating, as function displaying information for newly displaying product information on said display unit of said at least one customer terminal (20), said new product information representing said function of said product specified in said searched function information, based on said acquired instruction; and
supplying said at least one customer terminal (20) with said generated product information through said Network (50).

8. The method according to claim 7, **characterized in that**:
said function information represents said name of said product, said manufacturer of said product, said retail price of said product and said function of said product; and
said method further comprises the step of
generating said function displaying information for displaying said product information representing said name of said product, said manufacturer of said product, said retail price of said product and said function of said product, based on said searched function information.

9. A program for controlling a computer to execute:
a process of acquiring specification information specifying a function of said user-requested product, from at least one customer terminal (20) through Network (50);
a process of searching function information representing a function of a product stored in storage means (15), based on said acquired specification information;
a process of reading feature information representing a feature of said product specified in said searched function information;
a process of generating feature displaying information for displaying said feature information on a display unit of said at least one customer terminal (20), using said read feature information; and
a process of supplying said at least one customer terminal (20) with said generated feature displaying information, through said Network (50).
